# DEMANDE DE BREVET EUROPEEN

(11) **EP 4 438 140 A1**
(43) Date de publication de la demande: **02.10.2024**
(21) Numéro de dépôt: 23305437.8
(22) Date de dépôt: 29.03.2023
(51) Int. Cl.: A63F 13/24, A63F 13/22, G05G 5/08, G06F 3/0489, H01H 21/22

(54) **DISPOSITIF D'ENTREE DE COMMANDE COMPORTANT UNE BUTEE MOBILE DE REGLAGE DE LA COURSE D'UNE GÂCHETTE DE COMMANDE ASSOCIEE A UN MECANISME DE VERROUILLAGE/DEVERROUILLAGE**

(71) Demandeur: NACON, 59273 Fretin (FR)
(72) Inventeur: FALC, Alain, 8500 Courtrai (BE); ALLAERT, Yannick, 59940 Estaires (FR); DEPREY, François, 59133 Phalempin (FR); ANDRE, Romain, 59000 Lille (FR)
(74) Mandataire: Matkowska, Franck

(57) **Abrégé**

Le dispositif d'entrée de commande, notamment contrôleur de jeu ou manette de jeu (1), comporte au moins une butée de réglage (70) adaptée pour pouvoir être déplacée dans au moins une première position de réglage, dans laquelle elle est apte à bloquer une gâchette de commande (6) de manière à réduire la course du mouvement de la gâchette de commande, et dans au moins une deuxième position de réglage dans laquelle la course du mouvement de la gâchette de commande (6) est supérieure à celle obtenue avec la première position de réglage. Le dispositif comprend un mécanisme de verrouillage/déverrouillage (71) comprenant un élément d'actionnement (710) dont une partie (710b) au moins est positionnée à l'extérieur de la coque (2), et qui est mobile entre au moins une configuration déverrouillée, dans laquelle il est apte à être déplacé en entraînant la butée de réglage (70) dans chacune desdites positions de réglage, et au moins une configuration verrouillée, dans laquelle il permet de bloquer la butée de réglage (70) par rapport au corps (2) du dispositif au moins dans ladite première position de réglage.

## Description

### Domaine technique

La présente invention concerne les dispositifs d'entrée de commande, notamment de type contrôleurs de jeu, et plus particulièrement les manettes de jeu, comportant au moins une gâchette de commande mobile et actionnable par un utilisateur, de préférence par pression au moyen d'un doigt. Dans ce domaine, elle concerne un perfectionnement permettant à un utilisateur de régler la course de la gâchette de commande.

### Art antérieur

On désigne d'une manière générale dans le présent texte par « dispositif d'entrée de commande », tout dispositif permettant à un utilisateur au moins d'entrer manuellement des commandes dans un système électronique et/ou informatique.

La communication entre le « *dispositif d'entrée de commande* » et le système électronique et/ou informatique peut indifféremment être de type filaire ou de type sans fil.

Les contrôleurs de jeu, et plus particulièrement les manettes de jeu, sont des dispositifs d'entrée de commande particuliers, qui de manière non exhaustive, sont par exemple utilisés pour permettre à un utilisateur d'interagir avec un jeu vidéo, en particulier pour commander un personnage virtuel dans un jeu ou pour interagir avec un environnement virtuel.

Les dispositifs d'entrée de commande peuvent par exemple également être utilisés pour permettre à un utilisateur de sélectionner du contenu audio et/ou vidéo ou pour commander différents types d'appareils électroniques, tels qu'un téléviseur, ordinateur, ...

Plus particulièrement, certains dispositifs d'entrée de commande comportent une ou plusieurs gâchettes de commande mobiles, le plus souvent rotatives, qui sont actionnables par un utilisateur pour entrer une commande et qui généralement peuvent être plus ou moins enfoncées par une pression exercée par un utilisateur. Lorsque le dispositif d'entrée de commande présente une ergonomie adaptée pour être tenu à une main ou à deux mains par un utilisateur, ces gâchettes de commande sont de préférence digitales, c'est-à-dire actionnables par pression au moyen d'un doigt, le plus souvent l'index de l'utilisateur. Plus particulièrement lorsque le dispositif d'entrée de commande est une manette de jeu qui présente une ergonomie adaptée pour être tenue à deux mains par un utilisateur, il comporte, le plus souvent, deux gâchettes de commande gauche et droite.

Une gâchette de commande peut être utilisée pour entrer une commande binaire de type tout ou rien. Le plus souvent, elle est néanmoins utilisée pour entrer une commande progressive et continue qui dépend de sa position. Par exemple, elle peut être utilisée pour modifier la vitesse de déplacement d'un objet ou personnage virtuel dans un environnement virtuel, tel qu'un jeu, ou par exemple pour modifier la vitesse de tir en rafale d'une arme dans un jeu de combat ou équivalent.

Afin notamment d'adapter la réactivité de la gâchette de commande, par exemple pour permettre à un utilisateur d'entrer des commandes de manière plus ou moins rapides, il est souhaitable que l'utilisateur puisse régler facilement la course du mouvement de la gâchette.

Différentes solutions ont été proposées à ce jour.

Un premier type de solution, décrit par exemple dans les brevets américains US 10,188,940, US 10,596,455 et US 11,185,766 consiste à monter une butée fixe à l'intérieur du corps de la manette, qui se présente de manière usuelle sous la forme d'une coque en deux parties assemblées, plus communément appelée « casing ». Cette butée fixe permet de réduire la course en rotation de la gâchette de commande. L'inconvénient majeur de cette solution est qu'elle oblige l'utilisateur à ouvrir le corps de la manette pour effectuer le réglage de la course de la gâchette.

Un deuxième type de solution, décrit par exemple dans le brevet américain US 9,504, 911 ou dans la demande de brevet US 2012/032255, consiste à mettre en oeuvre une ou plusieurs vis de réglage à fonction de butées réglables pour bloquer la rotation une gâchette de commande rotative, lesquelles vis de réglage sont passées à travers le corps de la manette. Comparativement au premier type de solution susvisé des brevets américains US 10,188,940, US 10,596,455 et US 11,185,766, la mise oeuvre de ces vis permet un réglage plus facile de la course de la gâchette, mais présente au moins l'inconvénient majeur de nécessiter un outil adapté, de type tournevis, pour procéder au réglage, ce qui rend le réglage de la course de la gâchette peu pratique et fastidieux et impose à l'utilisateur d'interrompre le jeu ou équivalent pendant une durée trop longue.

Afin de rendre le réglage plus simple et plus rapide, et notamment de permettre un réglage sans interrompre le jeu en cours, on a déjà proposé, par exemple dans la demande de brevet américain US 2012/0142418 et dans la demande de brevet européen EP 3 302 737, des solutions techniques mettant en oeuvre un bouton de réglage, de type curseur actionnable par un doigt, facilement accessible et manipulable par l'utilisateur.

Dans la demande de brevet américain US 2012/0142418, la manette de jeu comporte (Fig.7A et 7B) une butée mobile pouvant être déplacée en translation entre deux positions, au moyen d'un bouton de réglage de type curseur, afin de régler la course en rotation d'une gâchette de commande rotative.

Dans la demande de brevet européen EP 3 302 737, la manette de jeu comporte un mécanisme de réglage mettant en oeuvre une came rotative, à fonction de butée, qui est actionnable en rotation au moyen d'un bouton de réglage permettant à un utilisateur de positionner en rotation la came rotative dans le trajet de la gâchette de commande et de régler facilement et rapidement la distance d'enfoncement de la gâchette de commande.

Dans les deux solutions techniques susvisées, le réglage de la course de la gâchette de commande n'est pas stable et n'est pas robuste et il arrive que le bouton de réglage soit déplacé accidentellement lors de la manipulation de la manette de jeu, notamment en cours de jeu.

Au surplus, subsidiairement ces deux solutions techniques présentent également l'inconvénient d'être faiblement robuste mécaniquement. En particulier, pour la manette de jeu décrite dans la demande de brevet européen EP 3 302 737, en cas de chocs répétés ou de choc trop important sur la gâchette de commande ou sur le bouton de réglage, par exemple lorsqu'un utilisateur laisse tomber la manette de jeu, les efforts mécaniques subis par la came rotative occasionnent des risques importants de cassure du système de réglage, en particulier au niveau de l'axe de rotation de la came. La solution technique décrite dans la demande de brevet américain US 2012/0142418 est faiblement robuste d'un point de vue mécanique, du fait notamment des contraintes de cisaillement subies par le bouton de réglage lorsque la gâchette de commande appuie sur cette butée mobile formant un bras de levier par rapport au bouton de réglage.

### Objectif de l'invention

L'invention propose une nouvelle solution technique permettant à un utilisateur de régler la course du mouvement d'une gâchette de commande d'un dispositif d'entrée de commande, notamment de type contrôleur de jeu ou manette de jeu.

### Résumé de l'invention

L'invention a ainsi pour objet un dispositif d'entrée de commande, notamment un contrôleur de jeu ou une manette de jeu, comportant un corps et au moins une gâchette de commande qui est mobile par rapport audit corps, et un mécanisme de réglage de la course du mouvement de ladite gâchette de commande, lequel mécanisme de réglage comporte au moins une butée de réglage adaptée pour pouvoir être déplacée dans au moins une première position de réglage, dans laquelle elle est apte à bloquer la gâchette de commande de manière à réduire la course du mouvement de la gâchette de commande, et dans au moins une deuxième position de réglage dans laquelle la course du mouvement de la gâchette de commande est supérieure à celle obtenue avec la première position de réglage.

De manière caractéristique selon l'invention, ledit mécanisme de réglage comprend un mécanisme de verrouillage/déverrouillage comprenant un élément d'actionnement, dont une partie au moins est positionnée à l'extérieur de la coque, et qui est mobile entre au moins une configuration déverrouillée, dans laquelle il est apte à être déplacé en entraînant la butée de réglage dans chacune desdites positions de réglage, et au moins une configuration verrouillée, dans laquelle il permet de bloquer la butée de réglage par rapport au corps du dispositif au moins dans ladite première position de réglage.

Le mécanisme de réglage de l'invention permet à un utilisateur de régler facilement et rapidement la course du mouvement de ladite gâchette de commande de manière manuelle, sans devoir utiliser d'outil.

Ce mécanisme de réglage permet également de régler la course du mouvement de ladite gâchette de commande, sans lâcher le dispositif d'entrée de commande lorsque celui-ci est adapté pour être tenu à une ou deux mains, tel qu'une manette de jeu.

Plus particulièrement, le réglage de la course du mouvement de ladite gâchette de commande peut être effectué, le cas échéant, sans interrompre l'utilisation du dispositif d'entrée de commande, et notamment lorsque le dispositif est une manette de jeu, sans interrompre le jeu.

Le mécanisme de verrouillage/déverrouillage de l'invention permet d'obtenir un réglage de la course du mouvement de la gâchette de commande qui est stable et robuste et permet avantageusement de réduire les risques de déplacement involontaire de la butée de réglage lors de la manipulation du dispositif d'entrée de commande, ce qui est plus particulièrement primordial lorsque ce dispositif est une manette de jeu.

Plus particulièrement, le dispositif d'entrée de commande de l'invention peut comporter les caractéristiques additionnelles et optionnelles suivantes, chaque caractéristique additionnelle et optionnelle pouvant être combinée avec l'une quelconque des autres caractéristiques techniques du dispositif :
- L'élément d'actionnement est adapté pour, dans sa configuration verrouillée, permettre le blocage de la butée de réglage par rapport au corps du dispositif dans chacune des positions de réglage de la butée de réglage.
- L'élément d'actionnement est mobile par rapport à la butée de réglage entre ladite configuration verrouillée et ladite configuration déverrouillée.
- L'élément d'actionnement est associé à un élément de rappel élastique et est adapté pour être amené et maintenu en configuration déverrouillée par une pression manuelle permettant d'enfoncer l'élément d'actionnement et contraindre l'élément de rappel élastique ; l'élément de rappel élastique (permet en l'absence de pression manuelle sur l'élément d'actionnement de rappeler élastiquement ledit élément d'actionnement dans sa configuration verrouillée.
- L'élément de rappel élastique est précontraint de manière à exercer sur l'élément d'actionnement une force de rappel le maintenant en configuration verrouillée, en l'absence de pression manuelle exercée sur cet élément d'actionnement.
- L'élément d'actionnement est mobile par rapport à la butée de réglage entre ladite configuration verrouillée et ladite configuration déverrouillée et l'élément de rappel élastique est positionné entre la butée de réglage et l'élément d'actionnement.
- La butée de réglage comporte un logement dans lequel est positionné l'élément de rappel élastique et une partie de l'élément d'actionnement.
- L'élément de rappel élastique est fixé à l'intérieur du corps, la butée de réglage et l'élément d'actionnement étant mobiles par rapport à l'élément de rappel élastique pour le positionnement de la butée de réglage dans chaque position de réglage.
- L'élément de rappel élastique comprend un ressort, de préférence un ressort hélicoïdal ou comprend une butée déformable élastiquement.
- L'élément d'actionnement comporte des éléments de verrouillage de type mâle ou femelle adaptés pour coopérer avec des éléments de verrouillage complémentaires du corps, afin de bloquer la butée de réglage par rapport au corps lorsque l'élément d'actionnement est amené en configuration verrouillée.
- Le dispositif comporte au moins une position de réglage de la butée de réglage dans laquelle la gâchette de commande est apte être déplacée en butée contre le corps.
- Le dispositif comporte au moins deux positions de réglage de la butée de réglage dans lesquelles la butée de réglage est apte à bloquer la gâchette de commande (6) de manière à obtenir deux courses différentes pour le mouvement de la gâchette de commande.
- La gâchette de commande est apte à être partiellement enfoncée par pression à l'intérieur du corps.
- La gâchette de commande est rotative par rapport au corps.
- La butée de réglage est mobile en translation, de préférence en translation rectiligne, pour son positionnement dans chaque position de réglage.
- La butée de réglage est montée coulissante sur un rail de guidage fixé à l'intérieur du corps et guidant la butée de réglage en translation.
- La gâchette de commande est rotative par rapport au corps et l'axe de translation de la butée de réglage est transversal, et de préférence perpendiculaire, à l'axe de rotation de la gâchette de commande.
- L'axe de translation (A₇₀) de la butée de réglage est parallèle à la direction de la poussée exercée sur la butée de réglage par la gâchette de commande.
- L'élément d'actionnement est mobile en translation, de préférence en translation rectiligne, par rapport à la butée de réglage entre ladite configuration verrouillée et ladite configuration déverrouillée.
- La butée de réglage est mobile en translation pour son positionnement dans chaque position de réglage et l'élément d'actionnement est mobile en translation par rapport à la butée de réglage entre ladite configuration verrouillée et ladite configuration déverrouillée, transversalement, et de préférence perpendiculairement, à l'axe de translation (A₇₀) de la butée de réglage.
- L'élément d'actionnement est monté sur la butée de réglage en étant aligné avec l'axe de translation de ladite butée de réglage.
- La butée de réglage est mobile en rotation pour son positionnement dans chaque position de réglage.
- Ladite au moins une gâchette de commande est creuse et une partie de la butée de réglage est positionnée à l'intérieur la gâchette de commande au moins lorsque la butée de réglage est dans une position de réglage dans laquelle elle fait office de butée au mouvement de la gâchette de commande.
- La gâchette de commande est rappelée élastiquement dans une position de repos.
- La butée de réglage est positionnée au moins en partie à l'intérieur du corps, et de préférence est entièrement positionnée à l'intérieur du corps, quelle que soit sa position de réglage.
- Le dispositif comporte au moins une butée de réglage additionnelle et l'élément d'actionnement est relié mécaniquement à cette butée de réglage additionnelle de manière à pouvoir entraîner ladite butée de réglage additionnelle dans chacune de ses positions de réglage en même temps que l'autre butée de réglage.
- L'élément d'actionnement permet dans sa configuration verrouillée, de bloquer chaque butée de réglage par rapport au corps du dispositif dans chacune des positions de réglage de ces butées de réglage.
- La butée de réglage additionnelle est positionnée au moins en partie à l'intérieur du corps, et de préférence est entièrement positionnée à l'intérieur du corps, quelle que soit sa position de réglage.
- La butée de réglage additionnelle est rotative.
- Le dispositif constitue une manette de jeu qui est adaptée pour être tenue à une main ou deux mains par un utilisateur, et de préférence dans laquelle la ou les gâchettes de commande sont digitales.

L'invention a également pour objet un procédé de réglage d'un dispositif d'entrée de commande susvisé, notamment d'un contrôleur de jeu ou d'une manette de jeu, comprenant les étapes suivantes : dans un premier temps, déverrouillage du mécanisme de verrouillage/déverrouillage par une action manuelle sur l'élément d'actionnement, dans un deuxième temps déplacement au moyen de l'élément d'actionnement de la butée de réglage dans l'une des positions de réglage, le mécanisme de verrouillage/déverrouillage étant maintenu manuellement en configuration déverrouillée, puis dans un troisième temps verrouillage du mécanisme de verrouillage/déverrouillage de manière à bloquer la butée de réglage dans ladite position de réglage.

De préférence, le verrouillage du mécanisme de verrouillage/déverrouillage est obtenu en lâchant l'élément d'actionnement.

### Brève description des dessins

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- La figure 1 est une vue de dessus d'une variante particulière de réalisation d'une manette de jeu conforme à l'invention.
- La figure 2 est une vue de dessous de la manette de jeu de la figure 1.
- La figure 3 est une vue de dessous de la manette montrant l'intérieur de la manette de la figure 1 lorsque la demi-coque inférieure de la manette ayant été retirée.
- La figure 4 est une vue en perspective isométrique de la manette de la figure 1, dont l'une des gâchettes de commande est en partie retirée de manière à montrer le mécanisme de rotation et de rappel élastique en position de repos de ladite gâchette de commande.
- La figure 5 est une vue en perspective isométrique et éclatée d'un exemple de mécanisme de verrouillage/déverrouillage conforme à l'invention.
- La figure 6 est une vue partielle montrant une gâchette de commande de la manette de la figure 1 en position initiale de repos (aucune pression manuelle exercée par un utilisateur sur la gâchette de commande), le mécanisme de verrouillage/déverrouillage étant dans sa configuration verrouillée, et le bouton d'actionnement du mécanisme verrouillage/déverrouillage étant dans une position de réglage autorisant une course en rotation maximale de la gâchette de commande.
- La figure 7 est une vue en coupe transversale de la manette de la figure 6.
- La figure 8 est une vue partielle montrant une gâchette de commande de la manette de la figure 1, enfoncée au maximum par une pression manuelle exercée par un utilisateur sur la gâchette de commande, le mécanisme de verrouillage/déverrouillage étant dans sa configuration verrouillée, et le bouton d'actionnement du mécanisme verrouillage/déverrouillage étant dans une position de réglage autorisant une course en rotation maximale de la gâchette de commande.
- Les figures 9 et 10 sont des vues montrant en coupe transversale, dans deux plans coupe différents, la gâchette de commande et le mécanisme de verrouillage/déverrouillage de la manette de la figure 8.
- La figure 11 est une vue partielle montrant une gâchette de commande de la manette de la figure 1 en position initiale de repos (aucune pression manuelle exercée par un utilisateur sur la gâchette de commande), le mécanisme de verrouillage/déverrouillage étant dans sa configuration verrouillée, et le bouton d'actionnement du mécanisme verrouillage/déverrouillage étant dans une position de réglage autorisant une course en rotation de la gâchette de commande qui est réduite et inférieure à celle des figures 9 et 10.
- La figure 12 est une vue partielle montrant la gâchette de commande de la manette de la figure 11, lorsqu'elle est enfoncée au maximum par une pression manuelle exercée par un utilisateur sur la gâchette de commande.
- Les figures 13 et 14 sont des vues montrant en coupe transversale, dans deux plans coupe différents, la gâchette de commande et le mécanisme de verrouillage/déverrouillage de la manette de la figure 12.
- La figure 15 est une vue montrant en coupe transversale la gâchette de commande et le mécanisme de verrouillage/déverrouillage de la manette de la figure 1, lorsque le mécanisme de verrouillage/déverrouillage est dans sa configuration déverrouillée, et le bouton d'actionnement du mécanisme verrouillage/déverrouillage est dans une position en translation intermédiaire entre deux positions de réglage de la course en rotation de la gâchette de commande.
- La figure 16 est une vue en perspective isométrique d'une deuxième variante de réalisation avec élément d'actionnement déporté.
- La figure 17 représente une troisième variante de réalisation avec butée de réglage rotative.
- La figure 18 représente une quatrième variante de réalisation dans laquelle l'élément de rappel élastique est fixé à l'intérieur de la coque de la manette.
- Les figures 19 et 20 représentent une cinquième variante de réalisation avec butée de réglage rotative additionnelle.

### Description détaillée

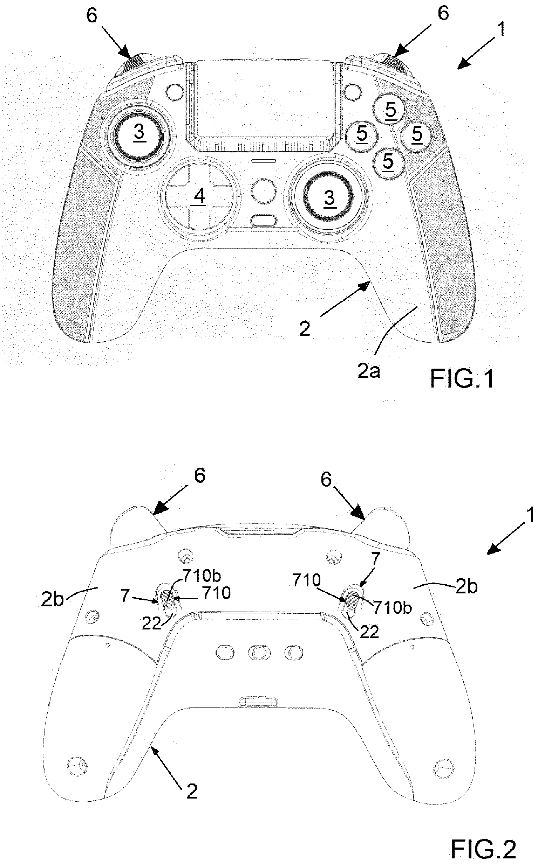

On a représenté sur la figure 1, un exemple particulier de manette de jeu 1 comportant une coque 2 assemblée, encore communément appelée « casing » et formant le corps de la manette.

Dans cet exemple particulier, cette coque 2 présente plus particulièrement une forme ergonomique adaptée pour faciliter sa prise à deux mains par un utilisateur.

Dans une autre variante, la manette pourrait être adaptée pour être tenue à une main ou pour être manipulée par un utilisateur en étant posée sur un support tel que par exemple une table.

Cette coque 2 comprend par exemple une demi-coque supérieure 2a (également communément désignée « *front casing* »), qui est assemblée par tout moyen, par exemple moyen de vis ou équivalent et/ou par collage et/ou par soudure, avec une demi-coque inférieure 2b (également communément désignée « *back casing* »).

Dans la variante particulière illustrée sur la figure 2, la demi-coque 2b est constituée de deux pièces distinctes. Elle peut également être constituée d'une seule pièce.

De manière usuelle, cette manette 1 comporte sur sa face de dessus (Fig.1) plusieurs éléments de commande actionnables manuellement par un utilisateur, dont notamment deux joysticks 3 pivotants, de type « *thumbstick* », un pavé directionnel 4 et des boutons de commande 5.

Cette manette 1 comporte également (Fig.2) deux gâchettes de commande digitale 6 (communément appelées « trigger »), qui sont positionnées respectivement sur un côté avant de la manette, de préférence de manière symétrique, dans la partie gauche et dans la partie droite de la manette 1.

Ces deux gâchettes de commande 6 sont mobiles par rapport à la coque 2 et sont de préférence rotatives.

Ces deux gâchettes de commande 6 sont actionnables individuellement par un utilisateur, par pression au moyen d'un doigt de chaque main lorsque l'utilisateur tient la manette de jeu 1 à deux mains.

Dans cet exemple de réalisation, chaque gâchette de commande 6 peut être plus ou moins enfoncée dans la coque 2 par une pression exercée par un utilisateur, notamment au moyen de l'un de ses doigts, généralement son index.

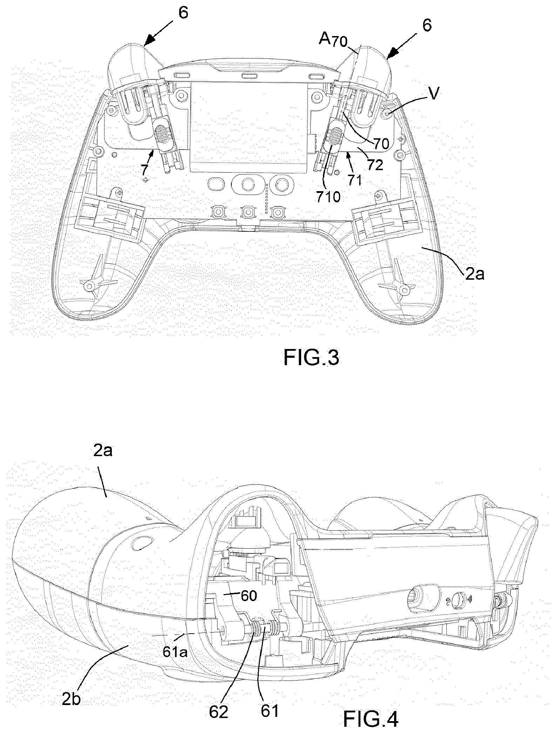

Plus particulièrement, en référence à la figure 4, une partie 60 de la gâchette 6 est de manière usuelle montée à l'intérieur de la demi-coque 2a sur un arbre 61, de manière à pouvoir pivoter en rotation par rapport à la coque 2 autour d'un axe de rotation 61a.

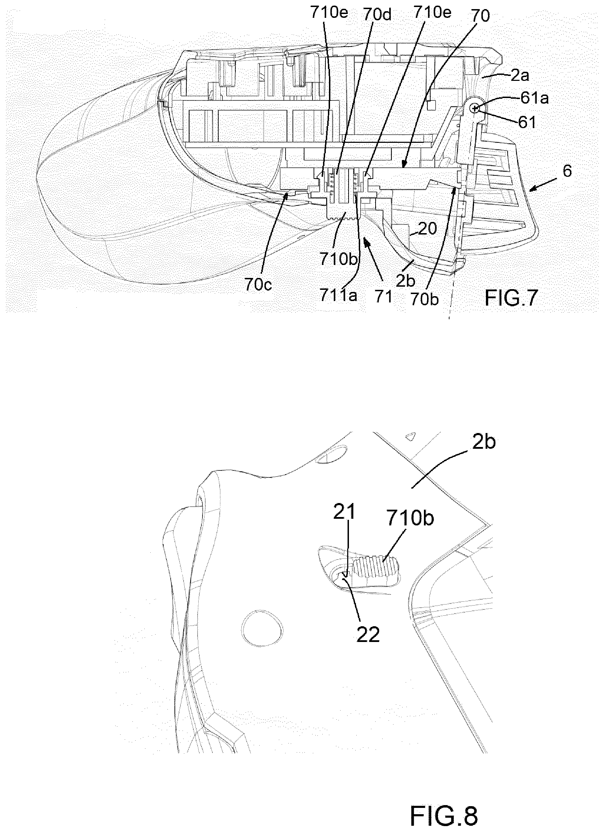

La gâchette 6 est rappelée élastiquement en position de repos, par exemple au moyen d'un ou plusieurs ressorts de rappel 62 montés sur l'arbre 61. Cette position de repos est illustrée notamment sur les figures 2,3, 6 et 7 et correspond à la position dans la laquelle elle est enfoncée le moins profondément dans la coque 2.

Dans une autre variante, la manette pourrait comporter une seule gâchette de commande ou plus de deux gâchettes de commande.

En référence à la figure 2, chaque gâchette de commande 6 est associée à un mécanisme de réglage 7 qui, dans cet exemple particulier, est facilement accessible en face de dessous de la manette de jeu 1.

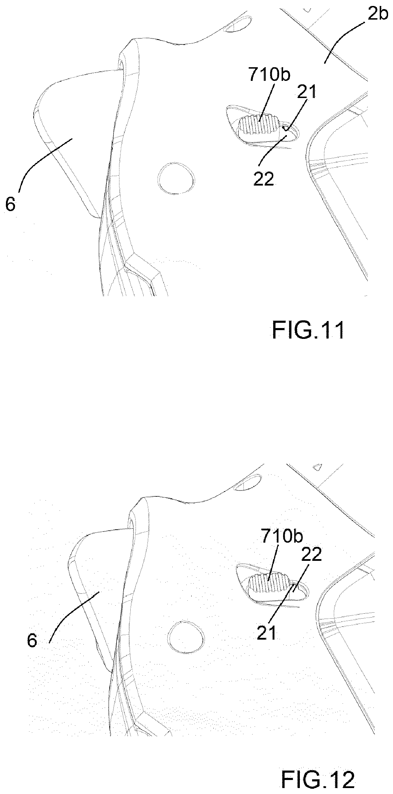

Une variante particulière de réalisation, conforme à l'invention, d'une gâchette de commande 6 et du mécanisme de réglage 7, qui lui est associé, vont à présent être détaillés en référence aux figures 3 à 14.

Dans cette variante, le mécanisme de réglage 7 comporte une butée de réglage 70, un mécanisme de verrouillage/déverrouillage 71 et un support 72 pour le montage de la butée 70 et du mécanisme de verrouillage/déverrouillage 71.

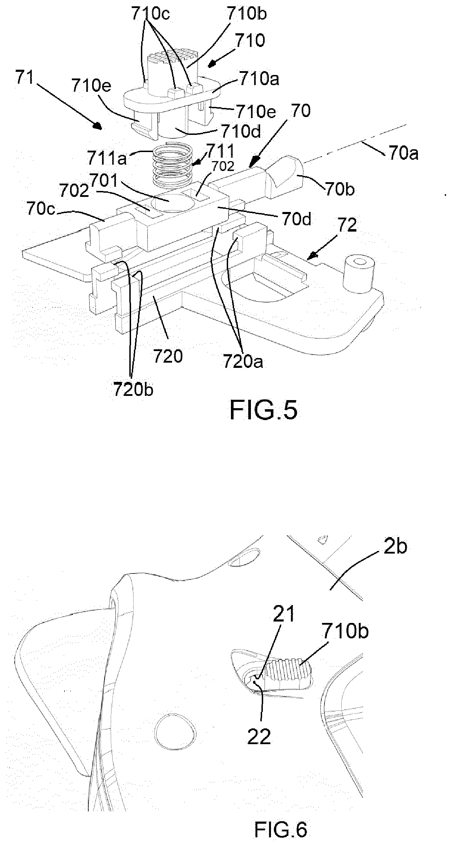

Le support 72 (Fig.5) est par exemple une pièce en plastique rapportée et est adapté pour être fixé à l'intérieur de la demi-coque 2a, par exemple au moyen d'au moins une vis de fixation V (FIG.3).

Dans une autre variante, le support 72 peut être constitué par un assemblage de plusieurs pièces.

Dans une autre variante, le support 72 peut être remplacé par un support qui fait partie intégrante de la demi-coque 2a.

Dans cette variante particulière, ce support 72 comporte une partie 720 adaptée pour recevoir la butée de réglage 70 et former un rail de guidage en translation rectiligne pour la butée de réglage 70.

Plus particulièrement ce rail de guidage 720 comporte (Fig.5) à son extrémité avant deux parois servant de butées fixes avant 720a et à son extrémité arrière deux parois servant de butées fixes arrière 720b. Les butées fixes avant 720a sont adaptées pour bloquer en translation la butée de réglage 70, lorsque la butée de réglage est amenée dans la première position de réglage décrite ci-après. Les butées fixes arrière 720b sont adaptées pour bloquer en translation la butée de réglage 70 lorsque la butée de réglage est amenée dans la deuxième position de réglage décrite ci-après.

La butée de réglage 70 (Fig.5) est une pièce linéaire d'axe longitudinal 70a, par exemple une pièce en plastique, comportant une partie avant 70b à fonction de butée pour le blocage de la gâchette 6, une partie arrière 70c, et une partie centrale 70d adaptée pour recevoir le mécanisme de verrouillage/déverrouillage 71.

La butée de réglage 70 est une pièce par exemple plastique. Dans une autre variante, la butée de réglage 70 peut être constituée par un assemblage de plusieurs pièces.

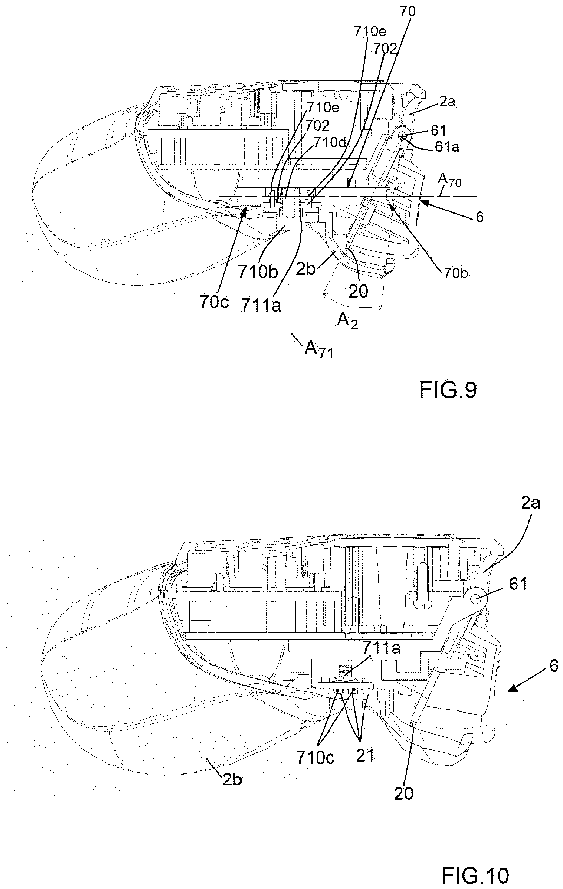

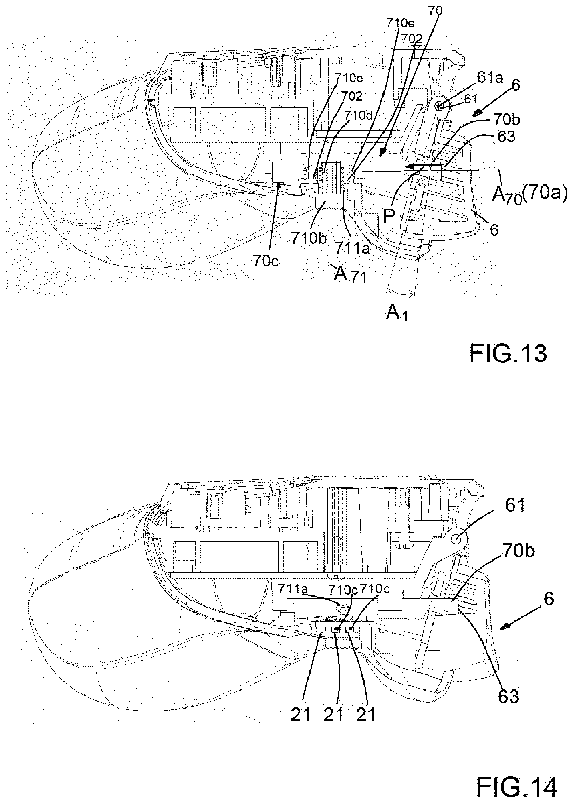

La butée de réglage 70 est adaptée pour être montée coulissante à l'intérieur de la coque 2 sur la partie 720 à fonction de rail de guidage du support 72, de manière à pouvoir coulisser en translation rectiligne dans la direction de son axe longitudinal 70a (axe de translation T / Figures 9 et 13), en étant guidée en translation. Elle peut ainsi coulisser en translation rectiligne dans un sens ou dans l'autre entre deux positions de réglage extrêmes :
- une première position de réglage, illustrée notamment sur la figure 13, dans laquelle sa partie avant 70b à fonction de butée permet de bloquer en rotation la gâchette de commande 6 lorsque la gâchette de commande 6 a pivoté d'un angle maximum prédéfini A1 par rapport à sa position initiale au repos, ce qui permet de réduire la course en rotation de la gâchette de commande 6 ;
- une deuxième position de réglage, illustrée notamment sur la figure 9, dans laquelle d'une manière générale la course en rotation de la gâchette de commande 6 est supérieure à celle obtenue avec la première position de réglage, la gâchette de commande 6 pouvant pivoter par rapport à sa position initiale au repos d'un angle maximum prédéfini A2 supérieur à l'angle susvisé A1.

Dans une autre variante, la translation de butée de réglage 70 peut ne pas être rectiligne. En outre, le déplacement de la butée de réglage 70 n'est pas nécessairement une translation.

Dans cette variante particulière de réalisation, dans la première position de réglage susvisée, la partie centrale 70d de la butée de réglage 70 est en butée contre les butées fixes avant 720a ; dans la deuxième position de réglage susvisée, la partie centrale 70d de la butée de réglage 70 est en butée contre les butées fixes arrière 720b. Ces butées 720a et 720b permettent de faciliter le réglage du positionnement de la butée mobile 70.

Dans les exemples particuliers illustrés, mais de manière non limitative de l'invention, l'angle A2 correspond à l'enfoncement maximum de la gâchette de commande 6 et l'angle A1 est égal à 50% de l'angle A2.

Avantageusement la butée de réglage 70 est entièrement positionnée à l'intérieur de la coque 2, quelle que soit sa position de réglage. Dans une autre variante, la butée de réglage 70 peut être en partie seulement positionnée à l'intérieur de la coque 2, en particulier lorsqu'elle est dans sa première position de réglage susvisée, la partie avant 70b pouvant notamment être positionnée en dehors de la coque 2.

Plus particulièrement, dans cette variante de réalisation, et de manière non imitative de l'invention, dans ladite deuxième position de réglage, la partie avant 70b de la butée de réglage 70 est suffisamment éloignée de gâchette de commande 6 pour ne jamais la bloquer en rotation ; le blocage en fin de course de la gâchette de commande 6, qui correspond à l'enfoncement maximum de la gâchette de commande 6, est obtenu par une mise en butée de la gâchette de commande 6 contre une butée fixe 20 à l'intérieur de la demi-coque 2b.

Cette butée fixe 20 fait de préférence partie intégrante de la demi-coque 2b. Elle peut également consister en une pièce rapportée fixée à l'intérieur de la demi-coque 2b. La face de cette butée 20 destinée à être en contact avec la gâchette de commande peut également être protégée par un matériau de protection pouvant de préférence être remplacé, tel que par exemple un tampon en mousse déformable, et permettant d'une manière générale de réduire l'usure de la butée 20 et de la gâchette 6, et plus particulièrement d'amortir les chocs entre la butée 20 et la gâchette de commande 6.

De préférence, pour une meilleure compacité, la gâchette 6 est de préférence creuse et au moins dans la première position de réglage, illustrée sur la figure 13, la partie avant 70b de la butée de réglage 70 est positionnée à l'intérieur de la gâchette 6 et est adaptée pour coopérer avec une contrebutée 63 positionnée à l'intérieur de la gâchette de commande 6.

Dans les exemples particuliers illustrés, mais de manière non limitative de l'invention, l'axe de translation A₇₀ (Figures 9 et 13) de la butée de réglage 70 est transversal, et en l'espèce de préférence perpendiculaire, à l'axe de rotation 61a de la gâchette de commande 6, et est parallèle à la direction de la poussée P exercée sur la butée de réglage 70 par la gâchette de commande 6 (Figure 13) lorsqu'un utilisateur exerce sur la gâchette de commande 6 une pression l'amenant au contact de la butée de réglage 70.

Dans une autre variante de réalisation, l'axe de translation A₇₀ peut avoir une orientation différente, et peut par exemple être transversal, et notamment perpendiculaire à la direction de la poussée exercée sur la butée de réglage par la gâchette de commande.

Le mécanisme de verrouillage/déverrouillage 71 permet à un utilisateur de verrouiller manuellement de la butée de commande 70 dans chacune des deux positions de réglage susvisées. Il permet également à un utilisateur de déverrouiller manuellement la butée de commande 70 dans chacune des deux positions de réglage et d'entraîner manuellement la butée de réglage 70, lorsque celle-ci est déverrouillée, dans la position de réglage souhaitée.

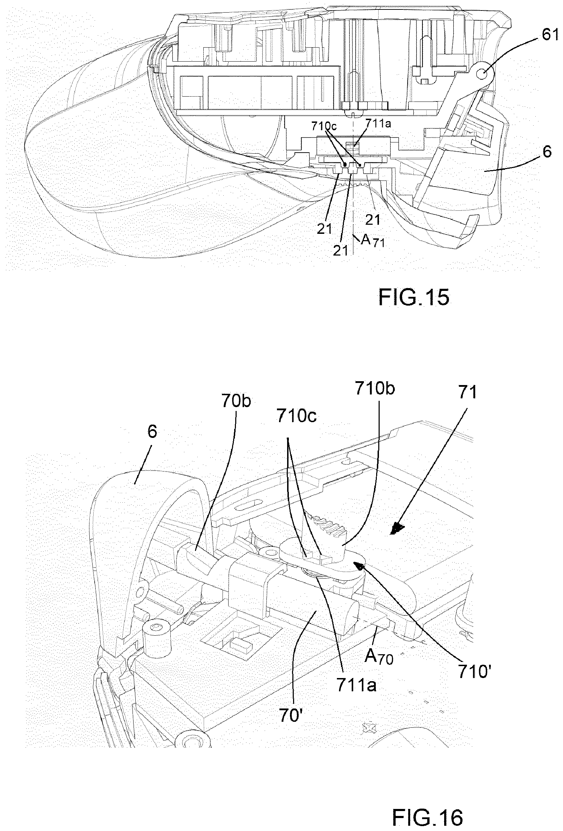

Dans la variante particulière de réalisation illustrée sur les figures, le mécanisme de verrouillage/déverrouillage 71 comprend un élément d'actionnement 710 (Figure 4), qui est monté sur la butée de réglage 70 et est mobile par rapport à la butée de réglage 70 entre :
- au moins une configuration verrouillée, dans laquelle il permet de bloquer la butée de réglage 70 par rapport à la coque 2 de la manette 1, dans chacune des positions de réglage de la butée 70 [Figures 9 et 10 - verrouillage dans la deuxième position de réglage) / Figures 13 et 14 - verrouillage dans la première position de réglage]
- et au moins une configuration déverrouillée, tel qu'illustré sur la figure 15, dans laquelle il est apte à être déplacé et à entraîner en translation rectiligne la butée de réglage 70 dans chacune desdites positions de réglage.

Plus particulièrement, dans cette variante particulière de réalisation l'élément d'actionnement 710 est mobile en translation rectiligne par rapport à la butée de réglage 70, entre ladite configuration verrouillée et ladite configuration déverrouillée, le long d'un axe de translation A₇₁ (Figures 9 et 13) qui est transversal, et de préférence perpendiculaire à l'axe de translation A₇₀ de la butée de réglage.

Plus particulièrement, dans l'exemple illustré, mais de manière non limitative de l'invention, l'axe de translation A₇₁ est également transversal, et en l'espèce perpendiculaire à l'axe de rotation 61a de la gâchette de commande 6. Dans une autre variante, il peut avoir une orientation différente et par exemple peut être parallèle à l'axe de rotation 61a de la gâchette de commande 6.

L'élément d'actionnement 710 est une pièce par exemple en plastique. Dans une autre variante, il peut être constitué par un assemblage de plusieurs pièces.

Plus particulièrement, l'élément d'actionnement 710 est monté sur la butée de réglage 70 en étant de préférence aligné (Figure 3) avec l'axe de translation A₇₀ de ladite butée de réglage 70, ce qui permet d'obtenir une construction plus compacte et plus robuste.

Le mécanisme de verrouillage/déverrouillage 71 comprend également (Figure 4) un élément de rappel élastique 711, qui permet d'une manière générale de rappeler élastiquement l'élément d'actionnement 710 dans sa configuration verrouillée.

Lorsqu'il est assemblé avec la butée de réglage 70, l'élément d'actionnement 710 est apte à être amené et maintenu en configuration déverrouillée par une pression manuelle, de manière à enfoncer l'élément d'actionnement 710 et contraindre, et dans ce cas particulier comprimer, l'élément de rappel élastique 711.

En l'absence de pression manuelle sur l'élément d'actionnement 710, l'élément de rappel élastique 711 permet de rappeler élastiquement ledit élément d'actionnement 710 dans sa configuration verrouillée, ce qui permet d'éviter une manipulation supplémentaire à l'utilisateur, puisqu'il lui suffit de relâcher la pression sur l'élément d'actionnement 710 pour que celui-ci revienne automatiquement dans sa configuration verrouillée.

Cet élément de rappel élastique 711 facilite également le réglage indexé du positionnement de la butée mobile 70 et permet à un utilisateur d'effectuer plus facilement à l'aveugle le réglage de la course d'une gâchette de commande 6 sans regarder le bouton d'actionnement, 710b,

De préférence l'élément de rappel élastique 711 est précontraint de manière à exercer sur l'élément d'actionnement 710 une force de rappel le maintenant en configuration verrouillée, en l'absence de pression manuelle exercée sur cet élément d'actionnement 710, ce qui permet avantageusement de renforcer le verrouillage et d'encore mieux réduire les risques de déverrouillage accidentel.

Dans cette variante particulière de réalisation, et de manière non limitative de l'invention, l'élément de rappel élastique 711 comporte un ressort hélicoïdal 711a.

L'invention n'est pas limitée à la mise en oeuvre d'un ressort hélicoïdal, mais ledit ressort hélicoïdal peut être remplacé par tout moyen de rappel élastique équivalent permettant, en l'absence de pression manuelle sur l'élément d'actionnement 710, de rappeler élastiquement ledit élément d'actionnement 710 dans sa configuration verrouillée.

Par exemple dans une autre variante de réalisation, l'élément de rappel élastique 711 peut comporter un ressort de type lame élastiquement déformable.

Par ailleurs, dans l'exemple particulier illustré, l'élément de rappel élastique 711 (ressort 711a) est conçu pour travailler en compression. Dans une autre variante, l'élément de rappel élastique 711 peut être conçu pour travailler en traction.

Plus particulièrement, dans cette variante particulière de réalisation, l'élément d'actionnement 710 comporte (Fig.5) une embase 710a dont la face supérieure est surmontée d'un bouton d'actionnement 710b. Ce bouton d'actionnement 710b est prévu pour être positionné au moins en partie à l'extérieur de la coque 2 (figures 2, 6, 8,11 et 12) de manière à pouvoir à être manipulé par l'utilisateur de la manette 1.

L'élément d'actionnement 710 comporte également, de part et d'autre du bouton d'actionnement 710b, des éléments de verrouillage 710c, de type mâle, qui sont en saillie par rapport à la face supérieure de l'embase 710a. Ces éléments de verrouillage 710c, de type mâle, sont destinés à venir s'emboîter dans des logements de verrouillage 21 complémentaires (Figures 6, 8 et 10) prévus dans la demi-coque 2b pour verrouiller l'élément d'actionnement 710 par rapport à la coque 2 (configuration verrouillée du mécanisme 71) de manière indexée dans chacune des positions de réglage de la butée 70 mobile.

Dans une autre variante de réalisation, les éléments de verrouillage 710c de l'élément d'actionnement 710 peuvent être de type femelle et les logements de verrouillage 21 dans la coque 2 peuvent être remplacés par des éléments de verrouillage de type mâle complémentaires des éléments de verrouillage de type femelle de l'élément d'actionnement 710.

Pour son montage sur la butée de réglage 70, l'élément d'actionnement 710 comporte également, sous cette embase 710a, un cylindre de guidage 710d central sur lequel peut être enfilé le ressort 711a et deux ergots élastiques 710e positionnés de part et d'autre du cylindre de guidage 710d.

Dans cette variante particulière, la partie centrale 70d de la butée de réglage 70 comporte un logement cylindrique 701 (Fig.5), qui débouche dans la face supérieure de la butée de réglage 70 et qui est adaptée pour recevoir le cylindre de guidage 710d de l'élément d'actionnement 710 et le ressort 711a enfilé sur ce cylindre de guidage 710d.

La partie centrale 70d de la butée de réglage 70 comporte également deux ouvertures traversantes 702 (Fig.5), positionnées de part et d'autre du logement cylindrique 701, et à travers lesquelles les ergots de verrouillage élastiques 710 peuvent être insérés de manière à solidariser l'élément d'actionnement 710 avec la butée de réglage 70.

Lorsque l'élément d'actionnement 710, l'élément de rappel élastique 711 (ressort 711a) et la butée de réglage 70 sont assemblés et que les deux demi-coques 2a, 2b sont assemblées, le bouton d'actionnement 710b de l'élément d'actionnement 710 est en saillie à l'extérieur de la coque 2 en étant positionné à travers une ouverture traversante 22 oblongue (Figures 2, 6, 8 , 11 et 12) dans la demi-coque 2b, et est ainsi accessible et peut être facilement manipulé par un utilisateur de la manette 1.

En l'absence de pression exercée par l'utilisateur sur le bouton d'actionnement 710b, les éléments de verrouillage 710c, de type mâle, de l'élément d'actionnement 710 sont emboîtés dans les logements 21 de verrouillage (figures 10 et 14) prévus dans la coque 2, de sorte que la butée de réglage 70 est verrouillée en position (configuration verrouillée) par rapport à la coque 2 de la manette dans l'une des positions de réglage susvisées.

De préférence, en configuration verrouillée, le ressort de rappel 711a est précontraint, en étant dans cet exemple particulier légèrement comprimé, de manière à exercer sur l'élément d'actionnement 710 une pression permettant de maintenir les éléments de verrouillage 710c, de type mâle dans les logements de verrouillage 21, et ainsi de maintenir le verrouillage en évitant un déverrouillage involontaire lors de la manipulation de la manette 1.

Pour amener la butée de réglage dans une autre position de réglage, il suffit dans un premier temps à l'utilisateur de la manette de déverrouiller la butée de réglage 70 pour l'amener en configuration déverrouillée, en exerçant sur le bouton d'actionnement 710b de l'élément d'actionnement 710 une pression suffisante pour comprimer l'élément de rappel élastique 711 (ressort 711a) et enfoncer suffisamment l'élément d'actionnement 710 de manière à dégager complètement les éléments de verrouillage 710c, de type mâle des logements de verrouillage 21.

Ensuite dans un deuxième temps (Fig.15), en maintenant l'élément d'actionnement 710 enfoncé, l'utilisateur déplace en translation l'élément d'actionnement 710 qui est solidaire de la butée de réglage 70, dans une direction parallèle à l'axe 70a de la butée de réglage 70, ce qui permet d'entraîner en translation rectiligne la butée de réglage 70 dans la direction de son axe 70a, jusqu'à ladite position de réglage souhaitée.

Lors de ce déplacement en translation, la butée de réglage 70 coulisse par rapport au rail de guidage 720 du support 72 en étant maintenue et guidée en translation par ledit rail de guidage 720.

Dans un troisième temps, lorsque la butée de réglage 70 est dans la position de réglage souhaitée, l'utilisateur relâche la pression sur l'élément d'actionnement 710, lequel est repoussé par l'élément de rappel élastique 711 (ressort 711a) de sorte que les éléments de verrouillage 710c de l'élément d'actionnement 710 se positionnent dans les logements de verrouillage 21 dans la coque 2, la butée de réglage 70 étant ainsi verrouillée de manière robuste et stable dans cette position de réglage (Figure 14 - première position de réglage - Figure 10 - deuxième position de réglage).

L'invention n'est pas limitée à la variante particulière de réalisation illustrée sur les figures 1 à 15 et s'étend également et de manière non exhaustive aux variantes additionnelles ci-après.

Le dispositif d'entrée de commande de l'invention ne se limite pas à une butée de réglage ayant deux positions de réglage, mais la butée de réglage peut être adaptée pour avoir trois positions de réglage différentes ou plus définissant chacune une course différente pour le mouvement de la gâchette de commande.

L'élément d'actionnement 710 n'est pas nécessairement monté sur la butée de réglage 70 en étant aligné avec l'axe de translation A₇₀ de ladite butée de réglage 70. Dans une autre variante de réalisation, représentée par exemple sur la figure 16, l'élément d'actionnement 710' peut être relié mécaniquement à la butée de réglage 70' mobile en translation, en étant déporté par rapport à l'axe de translation A₇₀ de ladite butée de réglage 70'. Dans cette variante de la figure 16, de manière identique à la variante des figures 1 à 15, l'élément d'actionnement 710' est associé à un ressort de rappel hélicoïdal 711a et comporte des éléments de verrouillage 710c aptes à coopérer avec des logements de verrouillage (non représentés) dans la coque de la manette ; le fonctionnement l'élément d'actionnement 710' associé au ressort de rappel hélicoïdal 711a pour le verrouillage et déverrouillage de la butée 70' par rapport à la coque de la manette est identique à la variante des figures 1 à 15.

Dans le cadre de l'invention, la butée de réglage n'est pas nécessairement mobile en translation, mais peut être mobile en rotation pour son positionnement dans chaque position de réglage.

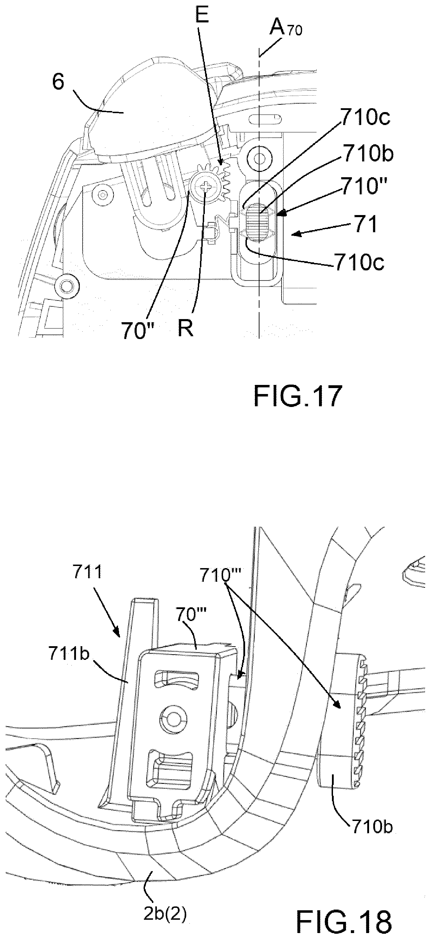

On a représenté sur la figure 17 un exemple de butée de réglage 70" rotative ayant un axe de rotation R. Une fois l'élément d'actionnement 710" déverrouillé par une pression comprimant le ressort qui lui est associé, l'élément d'actionnement 710" peut être déplacé en translation rectiligne le long d'un axe de translation A₇₀ perpendiculaire à l'axe de rotation R de la butée de réglage 70", dans un sens ou dans l'autre de manière entraîner en rotation la butée de réglage 70" entre au moins deux positions de réglage différentes, au moyen d'un engrenage E de type pignon/crémaillère reliant mécaniquement la butée rotative 70" à l'élément d'actionnement 710":
- une première position de réglage, telle que celle illustrée sur la figure 17, dans laquelle la butée de réglage 70" est positionnée en rotation par rapport à la gâchette de commande 6, de manière à former une butée sur le trajet de cette gâchette de commande 6 et à réduire la course en rotation de la gâchette de commande 6 ;
- une deuxième position de réglage, dans laquelle la butée de réglage 70" est positionnée en rotation par rapport à la gâchette de commande 6, en étant en dehors du trajet de cette gâchette de commande 6, de manière à ne pas faire obstacle au déplacement en rotation de la gâchette de commande 6.

Bien que le mouvement en rotation pour la gâchette de commande soit le plus simple à mettre en oeuvre et le plus fréquemment mis en oeuvre pour un contrôleur de jeu ou une manette de jeu, dans le cadre de l'invention la gâchette de commande n'est pas nécessaire rotative, l'invention pouvant s'appliquer plus généralement à d'autres types de mouvement d'une gâchette de commande. Par exemple, la gâchette de commande peut être conçue pour être actionnée manuellement en étant déplacée et guidée en translation, notamment de manière à être plus ou moins enfoncée dans la coque 2.

L'élément de rappel élastique 711 n'est pas nécessairement monté et embarqué sur la butée de réglage 70. Dans une autre variante, l'élément de rappel élastique peut est fixé à l'intérieur du corps 2 de la manette 1, la butée de réglage 70 et l'élément d'actionnement étant mobiles par rapport à l'élément de rappel élastique pour le positionnement de la butée de réglage dans chaque position de réglage.

Les positions de réglage de la butée mobile 70 ne sont pas nécessairement espacées l'une de l'autre, et la butée mobile 70 peut également être conçue pour permettre un réglage non indexé et continu de son positionnement.

Dans une autre variante, l'élément d'actionnement 710 et la butée de réglage peuvent être liés rigidement entre eux, l'élément d'actionnement 710 étant fixe par rapport à la butée de réglage. Dans ce cas, le verrouillage et le déverrouillage de la butée de réglage est obtenu en déplaçant l'ensemble constitué de l'élément d'actionnement et de la butée de réglage par rapport au corps (coque 2) du dispositif. Cette variante est néanmoins plus complexe à réaliser d'un point de vue mécanique.

On a représenté sur la figure 18, une autre variante de réalisation dans laquelle l'élément de rappel élastique 711 est une butée élastique 711b déformable élastiquement, de type lame ressort, qui est fixée à l'intérieur du corps 2 de la manette. La butée de réglage 70'" et l'élément d'actionnement 710‴ sont mobiles par rapport à la butée élastique 711b pour le positionnement de la butée de réglage dans chaque position de réglage.

Sur la figure 18, cette butée élastique 711b est au repos et l'élément d'actionnement 710‴ est dans sa configuration verrouillée. Lorsqu'on exerce une pression manuelle sur l'élément d'actionnement 710‴ pour l'enfoncer (déplacement vers la gauche sur la figure 18) dans sa configuration déverrouillée, l'élément d'actionnement 710‴ coulisse à travers la butée de réglage 70'" et exerce sur la butée élastique 711b une pression qui la déforme de manière élastique. Lorsque cette pression manuelle sur l'élément d'actionnement 710'" est relâchée, la butée élastique 711b reprend sa position de repos en repoussant ledit élément d'actionnement 710‴ dans sa configuration verrouillée, ce qui permet d'éviter une manipulation supplémentaire à l'utilisateur, puisqu'il lui suffit de relâcher la pression sur l'élément d'actionnement 710‴ pour que celui-ci revienne automatiquement dans sa configuration verrouillée.

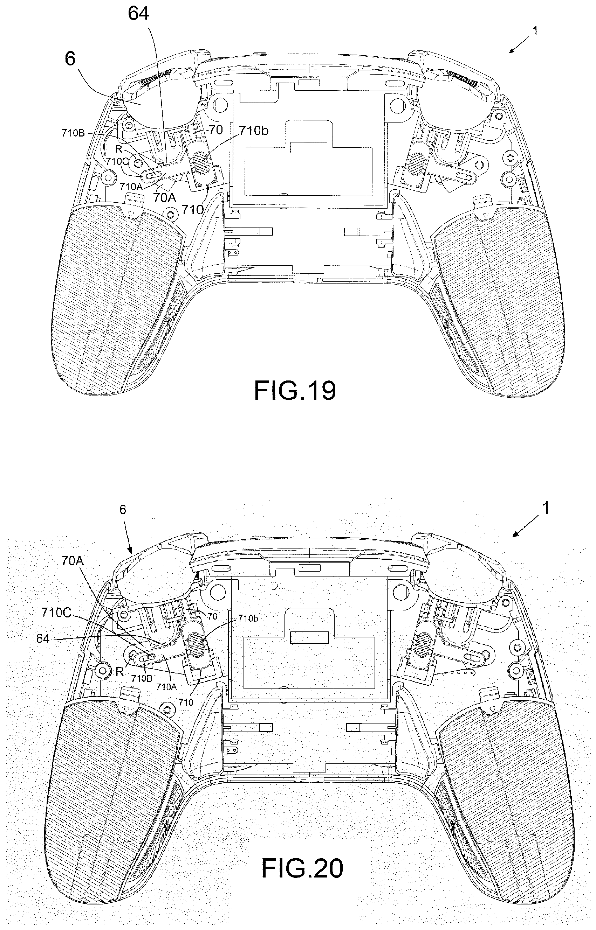

On a représenté sur la figure 19, une autre variante de réalisation qui se différencie de la variante des figures 1 à 15 par la mise en oeuvre d'une butée de réglage 70A additionnelle.

Cette butée de réglage 70A additionnelle est montée à l'intérieur de la coque 2 en étant rotative autour d'un axe de rotation R. L'élément d'actionnement 710 est relié mécaniquement à cette butée de réglage 70A de manière à pouvoir entraîner en rotation ladite butée de réglage 70A additionnelle dans chacune de ses positions de réglage, en même temps que l'autre butée de réglage 70, c'est-à-dire dans ce cas particulier entre la position de réglage de la figure 19, dans laquelle la gâchette 6 ne peut être bloquée en rotation par la butée 70A et présente une course en rotation maximale (angle A2 susvisé) et la position de réglage de la figure 20, dans laquelle la butée de réglage 70A permet de réduire la course en rotation de la gâchette 6 en bloquant une partie 64 de la gâchette 6 (angle A1 susvisé).

Dans le cas particulier des figures 19 et 20, la liaison mécanique entre l'élément d'actionnement 710 et la butée de réglage 70A comprend un bras 710A, qui est fixé à ou fait partie intégrante de l'élément d'actionnement 710 et qui comporte une lumière oblongue 710B dans laquelle est positionnée un pion d'entraînement 710C fixé à la butée de réglage 70A ou faisant partie intégrante de la butée de réglage 70A.

L'élément d'actionnement 710 permet dans sa configuration verrouillée, de bloquer chaque butée de réglage 70, 70A par rapport au corps 2 de la manette dans chacune des positions de réglage de ces butées de réglage 70, 70A.

Lorsque les deux butées de réglage 70 et 70A sont amenées simultanément au moyen de l'élément d'actionnement 710 dans leur position de réglage de la figure 20, elles permettent de réduire la course en rotation de la gâchette 6 ( angle A1 susvisé) en bloquant ladite gâchette 6 en deux points de mise en butée différents et espacés, ce qui permet d'améliorer la stabilité mécanique de la gâchette 6.

## Revendications

1. Dispositif d'entrée de commande, notamment contrôleur de jeu ou manette de jeu (1), comportant un corps (2) et au moins une gâchette de commande (6) qui est mobile par rapport audit corps, et un mécanisme de réglage (7) de la course du mouvement de ladite gâchette de commande (6), lequel mécanisme de réglage (7) comporte au moins une butée de réglage (70 ; 70' ; 70" ; 70‴) adaptée pour pouvoir être déplacée dans au moins une première position de réglage, dans laquelle elle est apte à bloquer la gâchette de commande (6) de manière à réduire la course du mouvement de la gâchette de commande, et dans au moins une deuxième position de réglage dans laquelle la course du mouvement de la gâchette de commande (6) est supérieure à celle obtenue avec la première position de réglage, **caractérisé en ce que** ledit mécanisme de réglage (7) comprend un mécanisme de verrouillage/déverrouillage (71) comprenant un élément d'actionnement (710 ; 710' ; 710" ; 710'"), dont une partie (710b) au moins est positionnée à l'extérieur de la coque (2), et qui est mobile entre au moins une configuration déverrouillée, dans laquelle il est apte à être déplacé en entraînant la butée de réglage (70 ; 70' ; 70" ; 70‴) dans chacune desdites positions de réglage, et au moins une configuration verrouillée, dans laquelle il permet de bloquer la butée de réglage (70 70' ; 70" ; 70'") par rapport au corps (2) du dispositif au moins dans ladite première position de réglage.

2. Dispositif selon la revendication 1, dans lequel l'élément d'actionnement (710 ; 710' ; 710" ; 710'") est adapté pour, dans sa configuration verrouillée, permettre le blocage de la butée de réglage (70 ; 70' ; 70") par rapport au corps (2) du dispositif dans chacune des positions de réglage de la butée de réglage (70).

3. Dispositif selon l'une quelconque des revendications 1 ou 2, dans lequel l'élément d'actionnement (710 ; 710' ; 710" ; 710'") est mobile par rapport à la butée de réglage (70 ; 70' ; 70" ; 70‴) entre ladite configuration verrouillée et ladite configuration déverrouillée.

4. Dispositif selon l'une quelconque des revendications 1 à 3, dans lequel l'élément d'actionnement (710 ; 710' ; 710" ; 710'") est associé à un élément de rappel élastique (711) et est adapté pour être amené et maintenu en configuration déverrouillée par une pression manuelle permettant d'enfoncer l'élément d'actionnement (710 ; 710' ; 710" ; 710'") et contraindre l'élément de rappel élastique (711), et dans lequel l'élément de rappel élastique (711) permet en l'absence de pression manuelle sur l'élément d'actionnement (710 ; 710' ; 710" ; 710'") de rappeler élastiquement ledit élément d'actionnement (710 ; 710' ; 710" ; 710'") dans sa configuration verrouillée.

5. Dispositif selon la revendication 4, dans lequel l'élément de rappel élastique (711) est précontraint de manière à exercer sur l'élément d'actionnement (710 ; 710' ; 710") une force de rappel le maintenant en configuration verrouillée, en l'absence de pression manuelle exercée sur cet élément d'actionnement (710 ; 710' ; 710").

6. Dispositif selon la revendication 4 ou 5, dans lequel l'élément d'actionnement (710 ; 710' ; 710") est mobile par rapport à la butée de réglage (70 ; 70' ; 70") entre ladite configuration verrouillée et ladite configuration déverrouillée et l'élément de rappel élastique (711) est positionné entre la butée de réglage (70 ; 70' ; 70") et l'élément d'actionnement (710 ; 710' ; 710").

7. Dispositif selon la revendication 6, dans lequel la butée de réglage (70 ; 70' ; 70") comporte un logement (701) dans lequel est positionné l'élément de rappel élastique (711) et une partie de l'élément d'actionnement (710 ; 710' ; 710").

8. Dispositif selon la revendication 4 ou 5, dans lequel l'élément de rappel élastique (711b) est fixé à l'intérieur du corps (2), la butée de réglage (70'") et l'élément d'actionnement (710‴) étant mobiles par rapport à l'élément de rappel élastique (711b) pour le positionnement de la butée de réglage dans chaque position de réglage.

9. Dispositif selon l'une quelconque des revendications 4 à 8, dans lequel l'élément de rappel élastique (711) comprend un ressort (711a), de préférence un ressort hélicoïdal ou comprend une butée (711b) déformable élastiquement.

10. Dispositif selon l'une quelconque des revendications 1 à 9, dans lequel l'élément d'actionnement (710 ; 710' ; 710" ; 710'") comporte des éléments de verrouillage (710c) de type mâle ou femelle adaptés pour coopérer avec des éléments de verrouillage complémentaires (21) du corps (2), afin de bloquer la butée de réglage (70 ; 70' ; 70" ; 70'") par rapport au corps (2) lorsque l'élément d'actionnement est amené en configuration verrouillée.

11. Dispositif selon l'une quelconque des revendications 1 à 10, dans lequel ladite au moins une gâchette de commande (6) est creuse et une partie (70b) de la butée de réglage est positionnée à l'intérieur la gâchette de commande (6) au moins lorsque la butée de réglage est dans une position de réglage dans laquelle elle fait office de butée au mouvement de la gâchette de commande.

12. Dispositif selon l'une quelconque des revendications 1 à 11, comportant au moins une butée de réglage (70A) additionnelle, et l'élément d'actionnement (710) est relié mécaniquement à cette butée de réglage (70A) additionnelle de manière à pouvoir entraîner ladite butée de réglage (70A) additionnelle dans chacune de ses positions de réglage en même temps que l'autre butée de réglage (70).

13. Dispositif selon l'une quelconque des revendications 1 à 12, constituant une manette de jeu qui est adaptée pour être tenue à une main ou deux mains par un utilisateur, et de préférence dans laquelle la ou les gâchettes de commande (6) sont digitales.

14. Procédé de réglage d'un dispositif d'entrée de commande, notamment d'un contrôleur de jeu ou d'une manette de jeu (1), selon l'une quelconque des revendications 1 à 13, comprenant les étapes suivantes : dans un premier temps, déverrouillage du mécanisme de verrouillage/déverrouillage (71) par une action manuelle sur l'élément d'actionnement (710 ; 710' ; 710" ; 710'"), dans un deuxième temps déplacement au moyen de l'élément d'actionnement (710 ; 710' ; 710" ; 710'") de la butée de réglage (70 ; 70' ; 70" ; 70‴) dans l'une des positions de réglage, le mécanisme de verrouillage/déverrouillage (71) étant maintenu manuellement en configuration déverrouillée, puis dans un troisième temps verrouillage du mécanisme de verrouillage/déverrouillage (71) de manière à bloquer la butée de réglage (70 ; 70' ; 70" ; 70'") dans ladite position de réglage.

15. Procédé selon la revendication 14 dans lequel le verrouillage du mécanisme de verrouillage/déverrouillage (71) est obtenu en lâchant l'élément d'actionnement (710 ; 710' ; 710" ; 710'").
